# EUROPEAN PATENT APPLICATION

(11) **EP 2 293 042 A2**
(43) Date of publication of application: **09.03.2011**
(21) Application number: 10174897.8
(22) Date of filing: 01.09.2010
(51) Int. Cl.: G01N 3/04, G01N 3/02, G01N 3/00

(54) **Testing machine with balancing weight**

(30) Priority: 02.09.2009 TW 098129581; 17.06.2010 TW 099119735
(71) Applicant: National Pingtung University of Science and Technology, Pingtung County 91201 (TW)
(72) Inventor: Hsieh, Chi-Wan, 91201, Neipu Hsiang (TW); Wu, Chia-Hsing, Kaohsiung City 807 (TW)
(74) Representative: Schwerbrock, Florian

(57) **Abstract**

A testing machine includes a fixed base (1), a movable seat (2), and a balancing weight (3). The fixed base (1) includes a first stationary portion (12). The movable seat (2) is mounted to a suspension rod (24) capable of moving the movable seat (2) along a longitudinal axis (Z) of the suspension rod (24). The movable seat (2) includes a second stationary portion (22) facing the first stationary portion (12). The balancing weight (3) and a center of mass of the first and second stationary portions (12, 22) are located on opposite sides of the longitudinal axis (Z). The movable seat (2) includes a mounting face (251) having a width extending in a width of direction (Y) perpendicular to the longitudinal axis (Z). The balancing weight (3) is mounted to the mounting face (251) and has a length extending in the width direction (Y). The length of the balancing weight (3) extends in an extent of 40%-100% of the width of the mounting face (251).

## Description

### BACKGROUND OF THE INVENTION

### 1. Field of the Invention

The present invention relates to a testing machine and, more particularly, to a testing machine with a balancing weight, such as a tensile testing machine or a creep testing machine.

### 2. Description of the Related Art

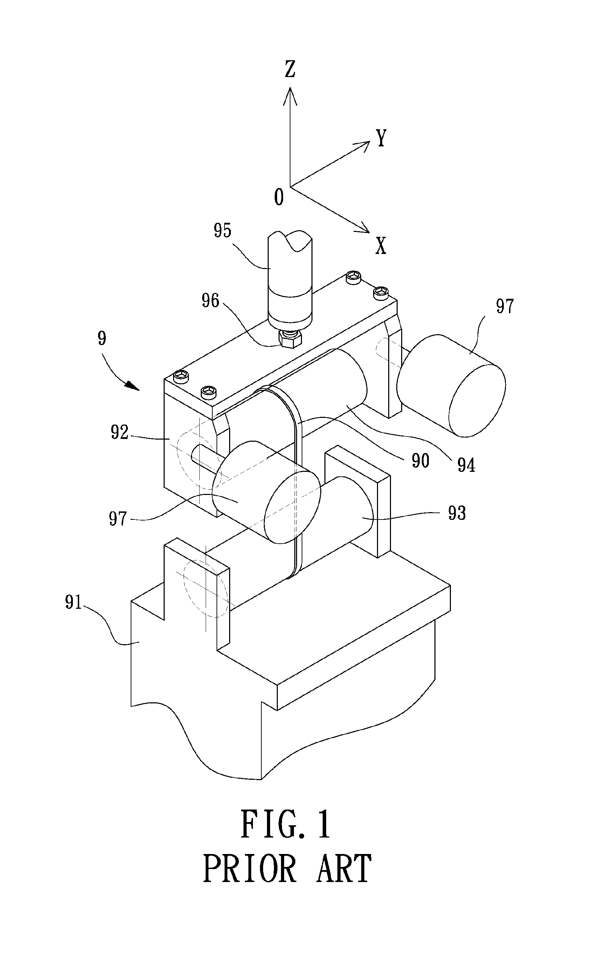

FIG. 1 shows a conventional tensile testing machine 9 including a fixed base 91 and a movable seat 92 connected by a connecting part 96 to a suspension rod 95. The suspension rod 95 can carry the movable seat 92 to move along a longitudinal axis Z of the suspension rod 95. A first rotating shaft 93 is mounted to the fixed base 91 and rotatable about a first rotating axis. A second rotating shaft 94 is mounted to the movable seat 92 and rotatable about a second rotating axis. The first and second rotating axes are parallel to and spaced from a width of direction Y perpendicular to the longitudinal axis Z. Two ends of an object 90 undergoing a tensile strength test are fixed to the first and second rotating shafts 93 and 94. The first and second rotating shafts 93 and 94 rotate in opposite directions to create a tensile force on the object 90. A data collecting device such as a computer collects the strain data of the object 90.

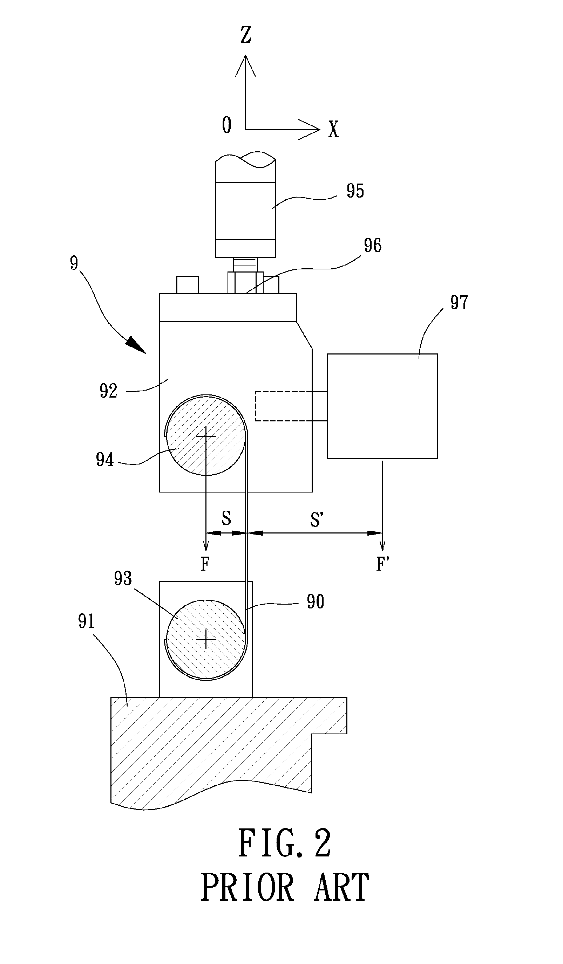

With reference to FIG. 2, since the object 90 is located along the longitudinal axis Z of the suspension rod 95, a rotational torque in a counterclockwise direction (with reference to the drawing sheet) will be generated from a connecting part 96 due to intolerable tensile force at the moment of the object 90 breaked. The connecting part 96 is liable to be damaged by this rotational torque.

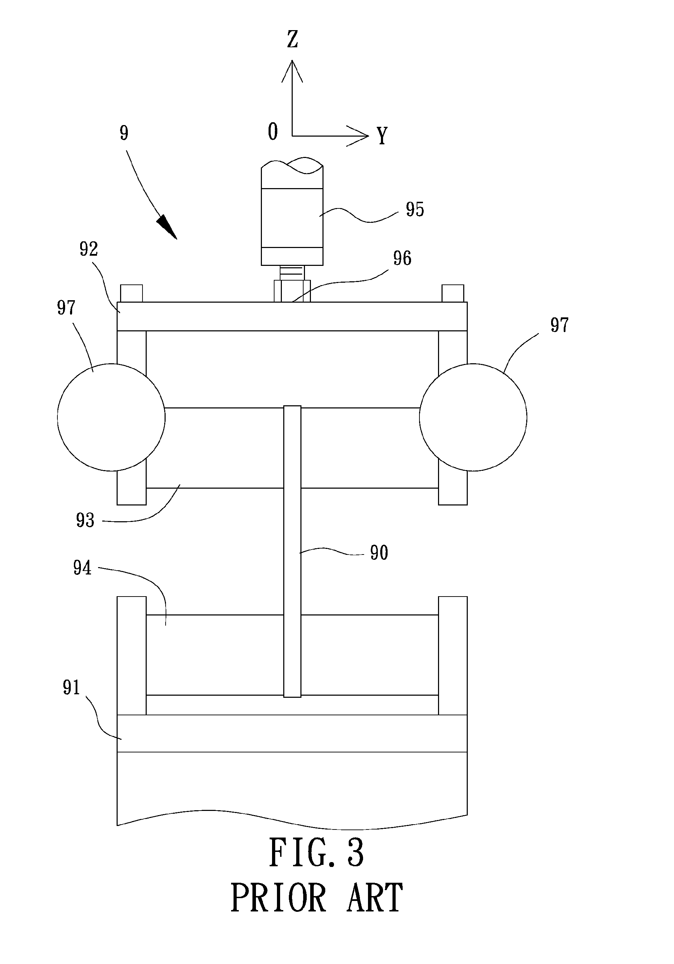

With reference to FIG. 3, two balancing weights 97 are mounted to a side of the movable seat 92 to counterbalance the rotational torque. The two balancing weights 97 and the object 90 are located on the same side of a plane including the first and second rotating axes of the rotatable shafts 93 and 94. Furthermore, the two balancing weights 97 are located at two ends of the movable seat 92. Namely, the two balancing weights 97 are located on opposite sides of an axis X perpendicular to the longitudinal axis Z and the width of direction Y. Thus, the two balancing weights 97 create a rotational torque in the clockwise direction (with reference to the drawing sheet) relative to the movable seat 92. As a result, the counterclockwise rotational torque is counterbalanced by the clockwise rotational torque created by the two balancing weights 97 at the moment of the object 90 breaked, avoiding damage to the connecting part 96.

However, the balancing weights 97 extend beyond the width of the movable seat 92 in the width of direction Y such that an operator operating the tensile testing machine often inadvertently bumps into the balancing weights 97. Although the weights of the balancing weights 97 can be reduced by increasing the arm of force of the balancing weights 97 along the axis X, the thicknesses of the balancing weights 97 along the axis X are increased and, thus, liable to break at the connection area between the balancing weights 97 and the movable seat 92 while having the same problem of bumping into the balancing weights 97 that have increased thicknesses along the axis X.

### SUMMARY OF THE INVENTION

An objective of the present invention is to provide a testing machine including a balancing weight that can effectively counterbalance the rotational torque generated at the moment while the object undergoes a tensile test break, avoiding damage to the connecting part.

Another objective of the present invention is to provide a testing machine including a balancing weight that has a length located in an extent of the width of the movable seat in a width direction, preventing the operator from bumping against the balancing weight while providing a better appearance and allowing easy design.

A further objective of the present invention is to provide a testing machine including a balancing weight that extends continuously in the extent of the width of the movable seat in the width direction such that the weight of the balancing weight can be increased without increasing the thickness of the balancing weight in a direction perpendicular to the width direction and the longitudinal axis of the suspension rod, preventing the operator from bumping against the balancing weight while providing a better appearance and allowing easy design.

Still another objective of the present invention is to provide a testing machine including spacer to increase the arm of force of the balancing weight. Thus, given the same torque, the weight of the balancing weight can be reduced. The overall weight of the movable seat is reduced accordingly. Furthermore, potential damage to the movable seat can be reduced.

Yet another objective of the present invention is to provide a testing machine allowing adjustment of the balancing weight through easy, simple operation.

The present invention fulfills the above objectives by providing, in a preferred form, a testing machine including a fixed base, a movable seat, and a balancing weight. The fixed base includes a first stationary portion. The movable seat is mounted to a suspension rod capable of moving the movable seat along a longitudinal axis of the suspension rod. The movable seat includes a second stationary portion facing the first stationary portion. The balancing weight and a center of mass of the first and second stationary portions are located on opposite sides of the longitudinal axis. The movable seat includes a mounting face having a width extending in a width direction perpendicular to the longitudinal axis. The balancing weight is mounted to the mounting face and has a length extending in the width direction. The length of the balancing weight extends in an extent of 40%-100% of the width of the mounting face.

Preferably, the length of the balancing weight is completely in the extent of the width of the mounting face of the movable seat.

Preferably, the movable seat includes an extension having the mounting face. The extension extends away from the longitudinal axis in a direction perpendicular to the longitudinal axis and the width direction. A spacer is mounted between the balancing weight and the extension.

Preferably, each of the first and second stationary portions is a rotatable shaft having a rotating axis parallel to the width direction of the mounting face. The fixed base includes two opposite walls, and the rotatable shaft of the fixed base is rotatably mounted between the two opposite walls. The movable seat includes two opposite walls, and the rotatable shaft of the movable seat is rotatably mounted between the two opposite walls.

Preferably, the length of the balancing weight extends in the extent of the width of the mounting face in the width direction, and the length of the balancing weight is equal to the width of the mounting face. Alternatively, the length of the balancing weight can extend beyond the extent of the width of the mounting face in the width direction.

The present invention will become clearer in light of the following detailed description of illustrative embodiments of this invention described in connection with the drawings.

### BRIEF DESCRIPTION OF THE DRAWINGS

The illustrative embodiments may best be described by reference to the accompanying drawings where:
FIG. 1 shows a partial, perspective view of a conventional tensile testing machine.
FIG. 2 shows a partial, side view of the tensile testing machine of FIG. 1 with a portion of the tensile testing machine cross sectioned.
FIG. 3 shows another partial, side view of the tensile testing machine of FIG. 1.
FIG. 4 shows a partial, exploded, perspective view of a testing machine of a first embodiment according to the preferred teachings of the present invention.
FIG. 5 shows a partial, cross sectional view of the testing machine of FIG. 4.
FIG. 6 shows a partial, side view of the testing machine of FIG. 4.
FIG. 7 shows a partial, cross sectional view of a testing machine of a second embodiment according to the preferred teachings of the present invention.

All figures are drawn for ease of explanation of the basic teachings of the present invention only; the extensions of the figures with respect to number, position, relationship, and dimensions of the parts to form the preferred embodiments will be explained or will be within the skill of the art after the following teachings of the present invention have been read and understood. Further, the exact dimensions and dimensional proportions to conform to specific force, weight, strength, and similar requirements will likewise be within the skill of the art after the following teachings of the present invention have been read and understood.

Where used in the various figures of the drawings, the same numerals designate the same or similar parts. Furthermore, when the terms "first", "second", "side", "end", "portion", "longitudinal", "length", "width", "thickness", and similar terms are used herein, it should be understood that these terms have reference only to the structure shown in the drawings as it would appear to a person viewing the drawings and are utilized only to facilitate describing the invention.

### DETAILED DESCRIPTION OF THE INVENTION

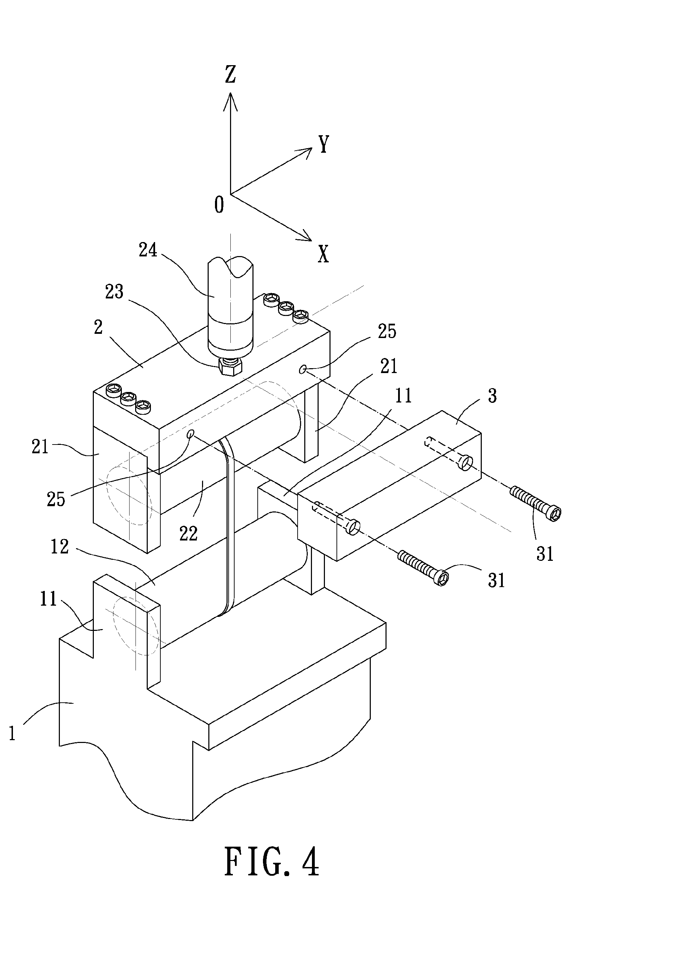

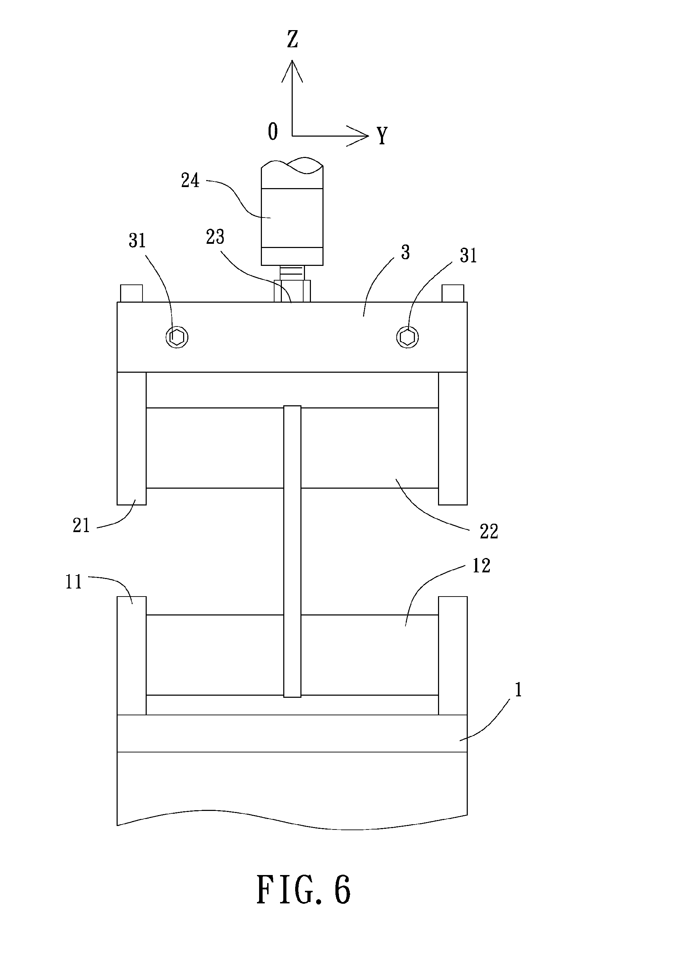

A testing machine of a first embodiment according to the preferred teachings of the present invention is shown in FIGS. 4-6 and in the form of a tensile testing machine. The testing machine includes a fixed base 1, a movable seat 2, and a balancing weight 3.

The fixed base 1 includes two opposite upright walls 11 spaced in a width of direction Y. A first stationary portion 12 is mounted between the two walls 11. The first stationary portion 12 can be in the form of a rotatable shaft having a rotating axis parallel to the width of direction Y. Alternatively, the first stationary portion 12 is in the form of a clamping member for holding an end of an object undergoing a tensile strength test.

The movable seat 2 is a rotatable/vertically movable seat of the tensile testing machine. The movable seat 2 is connected by a connecting part 23 to a suspension rod 24. The suspension rod 24 can carry the movable seat 2 to move relative to the fixed base 1 along a longitudinal axis Z of the suspension rod 24 perpendicular to the width of direction Y. Furthermore, the suspension rod 24 can carry the movable seat 2 to rotate relative to the fixed base 1 about the longitudinal axis Z of the suspension rod 24.

The movable seat 2 includes two opposite upright walls 21 between which a second stationary portion 22 is mounted. The second stationary portion 22 faces the first stationary portion 12. The second stationary portion 22 can be in the form of a rotatable shaft having a rotating axis parallel to the width of direction Y and spaced from the rotating axis of the rotatable shaft of the fixed base 1. Alternatively, the second stationary portion 22 can be in the form of a clamping member for holding the other end of the object undergoing the tensile strength test.

The rotating axes of the rotatable shafts of the fixed base 1 and movable seat 2 are on the same side of the longitudinal axis Z. The balancing weight 3 and a center of mass of the first and second stationary portions 12 and 22 are located on opposite sides of the longitudinal axis Z.

The movable seat 2 includes an extension 25 having a mounting face 251. The extension 25 extends away from the longitudinal axis Z in a direction X perpendicular to the longitudinal axis Z and the width of direction Y. The mounting face 251 has a width extending in the direction Y perpendicular to the longitudinal axis Z. The balancing weight 3 is mounted to the mounting face 251 and has a length extending in the width of direction Y The length of the balancing weight 3 extends in an extent of 40%-100% of the width of the mounting face 251. The length of the balancing weight 3 can be completely in the extent of the width of the mounting face 251 of the movable seat 2. Alternatively, the balancing weight 3 can be integrally formed with the movable seat 2.

It can be appreciated that the length of the balancing weight 3 in the width of direction Y can be equal to or smaller than the width of the mounting face 251 of the movable seat 2 in the width of direction Y. In the preferred forms shown, the length of the balancing weight 3 continuously extends in the extent of the width of the mounting face 251 in the width of direction Y, and the length of the balancing weight 3 is equal to the width of the mounting face 251. However, the length of the balancing weight 3 may extend beyond the extent of the width of the mounting face 251 in the width of direction Y. Furthermore, the testing machine can include a plurality of balancing weights 3 arranged along the direction X or the width of direction Y according to the teachings of the present invention.

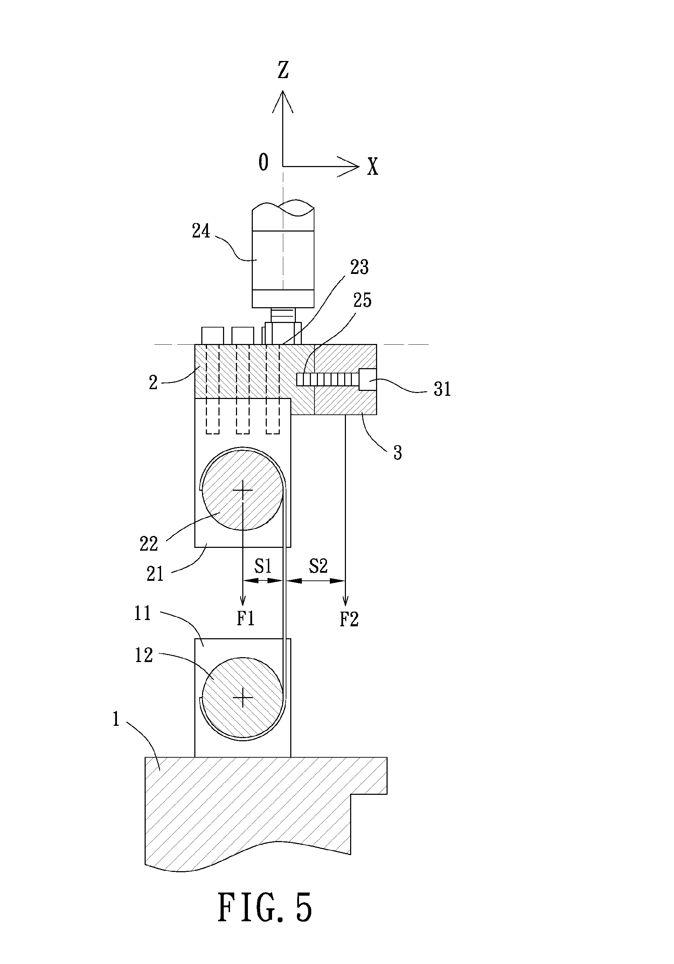

With reference to FIG. 5, the gravity F2 of the balancing weight 3 and the gravity F1 of the movable seat 2 are located on opposite sides of the longitudinal axis Z. The gravity F1 of the movable seat 2 has a first arm of force S1 to the longitudinal axis Z in the direction X. The gravity F2 of the balancing weight 3 has a second arm of force S2 to the longitudinal axis Z in the direction X. Since the length of the balancing weight 3 is larger than the sum of lengths of the conventional balancing weights 97 and since the length of the balancing weight 3 is located in the extent of the width of the movable seat 2, an operator operating the testing machine according to the preferred teachings of the present invention will not bump against the balancing weight 3. Furthermore, given the same torque, an increase in the length of the balancing weight 3 in the width direction Y reduces the thickness of the balancing weight 3 in the direction X, further avoiding the operator from bumping against the balancing weight 3.

Although the thickness of the balancing weight 3 in the direction X can be reduced by increasing the length of the balancing weight 3 in the width of direction Y, the overall weight of the balancing weight 3 can be increased by other provisions to reduce the second arm of force S2 while avoiding the operator from bumping against the balancing weight 3. Furthermore, given the same arm of force S2 and the same torque, the weight of the balancing weight 3 can be reduced. Further, the extending extent of the extension 25 in the direction X can be increased to reduce the thickness of the balancing weight 3 thereby reducing the weight of the balancing weight 3.

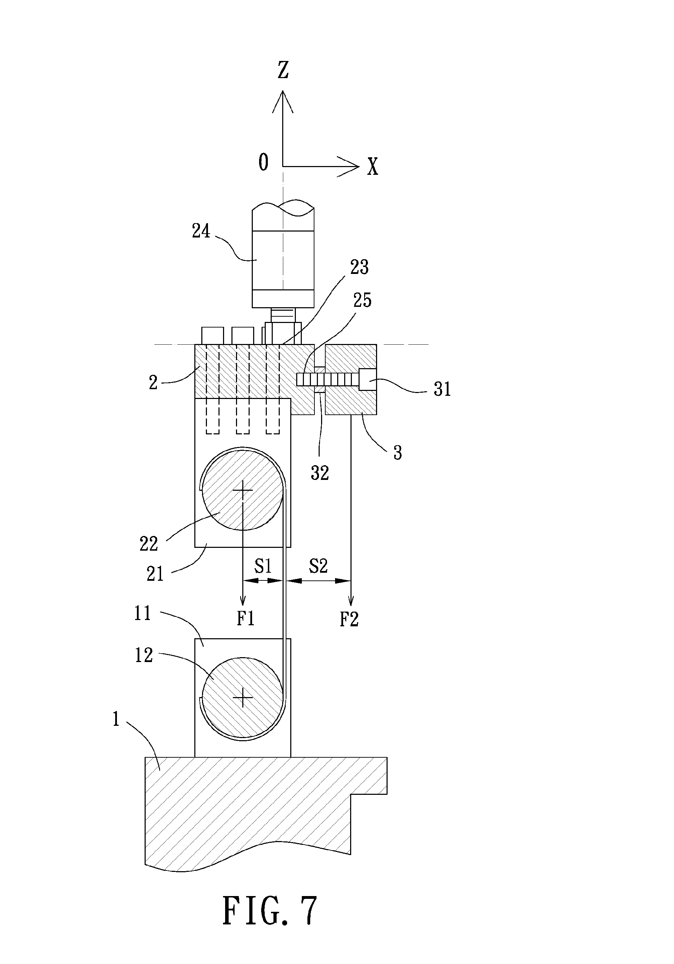

FIG. 7 shows a testing machine of a second embodiment according to the preferred teachings of the present invention modified from the first embodiment. Specifically, a spacer 32 such as a washer or sleeve is mounted between the balancing weight 3 and the extension 25 by a extending fastener 31 through the balancing weight 3 into the extension 25. This increases the second arm of force S2 in the direction X and, thus, reduces the weight of the balancing weight 3 while providing the same torque.

The balancing weight 3 of the testing machine according to the preferred teachings of the present invention can effectively counterbalance the torque generated by the first and the second stationary portions 11 and 12 at the moment the object undergoing the tensile strength test breaks, avoiding breakage of the connecting part 23.

Since the length of the balancing weight 3 is located in the extent of the width of the movable seat 2 in the width of direction Y, the operator will not bump against the balancing weight 3 while providing a better appearance and allowing easy design.

Since the balancing weight 3 extends continuously in the extent of the width of the movable seat 2 in the width of direction Y, the weight of the balancing weight 3 can be increased without increasing the thickness of the balancing weight 3 in the direction X, preventing the operator from bumping against the balancing weight 3 while providing a better appearance and allowing easy design.

Given the same torque, the weight of the balancing weight 3 of the testing machine according to the preferred teachings of the present invention can be reduced by providing the spacer 32 that increases the second arm of force S2 of the balancing weight 3 in the direction X. The overall weight of the movable seat 2 is, thus, reduced. Furthermore, potential damage to the movable seat 2 can be reduced.

Thus since the invention disclosed herein may be embodied in other specific forms without departing from the spirit or general characteristics thereof, some of which forms have been indicated, the embodiments described herein are to be considered in all respects illustrative and not restrictive. The scope of the invention is to be indicated by the appended claims, rather than by the foregoing description, and all changes which come within the meaning and range of equivalency of the claims are intended to be embraced therein.

## Claims

1. A testing machine comprising a fixed base (1), a movable seat (2), and a balancing weight (3), with the fixed base (1) including a first stationary portion (12), with the movable seat (2) mounted to a suspension rod (24) capable of moving the movable seat (2) along a longitudinal axis (Z) of the suspension rod (24), with the movable seat (2) including a second stationary portion (22) facing the first stationary portion (12), with the balancing weight (3) and a center of mass of the first and second stationary portions (12, 22) located on opposite sides of the longitudinal axis (Z), **characterized in that**:
the movable seat (2) includes a mounting face (251) having a width extending in a width direction (Y) perpendicular to the longitudinal axis (Z),
the balancing weight (3) is mounted to the mounting face (251) and has a length extending in the width direction (Y), the length of the balancing weight (3) extends in an extent of 40%-100% of the width of the mounting face (251).

2. The testing machine as claimed in claim 1, wherein the length of the balancing weight (3) is completely in the extent of the width of the mounting face (251) of the movable seat (2).

3. The testing machine as claimed in claim 1, wherein the movable seat (2) includes an extension (25) having the mounting face (251).

4. The testing machine as claimed in claim 3, wherein the extension (25) extends away from the longitudinal axis (Z) in a direction (X) perpendicular to the longitudinal axis (Z) and the width direction (Y).

5. The testing machine as claimed in claim 3, further comprising: a spacer (32) mounted between the balancing weight (3) and the extension (25).

6. The testing machine as claimed in claim 1, wherein each of the first and second stationary portions (12, 22) is a rotatable shaft having a rotating axis parallel to the width direction (Y) of the mounting face (251).

7. The testing machine as claimed in claim 6, wherein the fixed base (1) includes two opposite walls (11), and wherein a rotatable shaft of the fixed base (1) is rotatably mounted between the two opposite walls (11).

8. The testing machine as claimed in claim 6, wherein the movable seat (2) includes two opposite walls (21), and wherein a rotatable shaft of the movable seat (2) is rotatably mounted between the two opposite walls (21).

9. The testing machine as claimed in claim 1, wherein the length of the balancing weight (3) extends in the extent of the width of the mounting face (251) in the width of direction (Y), and wherein the length of the balancing weight (3) is equal to the width of the mounting face (251).

10. The testing machine as claimed in claim 1, wherein the length of the balancing weight (3) extends beyond the extent of the width of the mounting face (251) in the width of direction (Y).
